(19) Europäisches Patentamt

European Patent Office

Office européen des brevets

(11) **EP 1 193 900 B1**

(12) **FASCICULE DE BREVET EUROPEEN**

(45) Date de publication et mention
de la délivrance du brevet:
**06.12.2006 Bulletin 2006/49**

(51) Int Cl.:
***H04J 3/06*** *(2006.01)*

(21) Numéro de dépôt: **01402534.0**

(22) Date de dépôt: **01.10.2001**

(54) **Procédé d'émission d'un signal de synchronisation dans un système TDD**

Verfahren zur übertragung eines Synchronisationssignals in einem TDD-System

Method for transmitting a synchronization signal in a TDD system

(84) Etats contractants désignés:
**AT BE CH CY DE DK ES FI FR GB GR IE IT LI LU MC NL PT SE TR**

(30) Priorité: **02.10.2000 FR 0012762**

(43) Date de publication de la demande:
**03.04.2002 Bulletin 2002/14**

(73) Titulaire: **Mitsubishi Electric Information Technology Centre Europe B.V.
1119 NS Schiphol Rijk (NL)**

(72) Inventeurs:
• **Rudolf, Marian,
Mitsubishi Electric lte
35700 Rennes (FR)**

• **Jechoux, Bruno,
Mitsubishi Electric lte
35700 Rennes (FR)**

(74) Mandataire: **Maillet, Alain
Cabinet le Guen & Maillet,
5, Place Newquay,
B.P. 70250
35802 Dinard Cedex (FR)**

(56) Documents cités:
**WO-A-00/57581          DE-C- 19 916 063
US-A- 5 666 366          US-A- 6 005 854**

**Description**

La présente invention concerne un procédé d'émission d'un signal de synchronisation pendant un intervalle de temps de synchronisation d'un système de télécommunication radio-mobile du type duplex à division de temps (TDD). Un tel signal est par exemple utilisé pour assurer la synchronisation des stations de base d'un système de télécommunication radio-mobile du type duplex à division de temps (TDD). Ledit système de télécommunication est par exemple le système en cours de normalisation communément appelé 3GPP W-CDMA TDD.

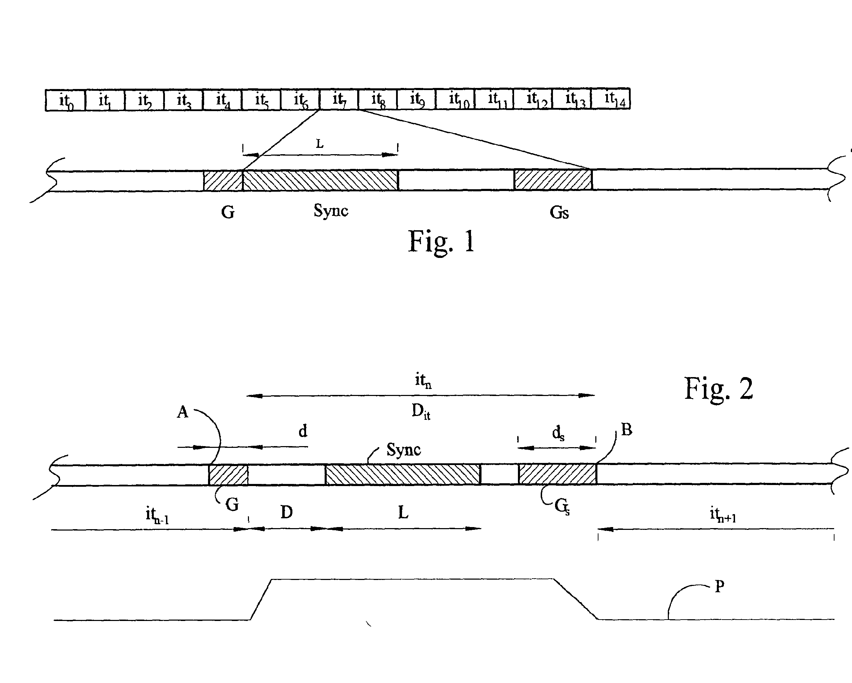

On a représenté à la Fig. 1 une trame radio d'un tel système de télécommunication du type duplex à division de temps. Elle est constituée de quinze intervalles de temps dont certains, par exemple les intervalles $it_0$, $it_1$, $it_2$, $it_5$, $it_6$ et $it_8$, sont destinés au transport des données (au sens large du terme) dans le sens descendant (station de base vers station mobile) alors que d'autres, par exemple les intervalles $it_3$, $it_4$, $it_7$, $it_9$, $it_{10}$, $it_{11}$, $it_{12}$, $it_{13}$, $it_{14}$ et $it_{15}$, sont destinés au transport des données dans le sens montant (station mobile vers station de base). Dans ce système, plusieurs stations mobiles ou de base peuvent émettre ou recevoir des données dans ou d'un même intervalle de temps. Elles sont différenciées par multiplexage à division de code (Code Division Multiple Access = CDMA).

Chaque intervalle de temps est pourvu d'une période de garde afin que la réception du signal qui a été émise par une station mobile ne soit pas perturbée par des dérives de temps ou des retards dus à l'éloignement plus ou moins important de cette station mobile par rapport à la station de base réceptrice. Une période de garde assure ainsi que le signal reçu d'une station mobile soit toujours dans l'intervalle de temps qui lui est alloué.

Du fait qu'une même fréquence est utilisée aussi bien dans le sens montant que dans le sens descendant, il est nécessaire que soit assurée la synchronisation des stations de base. Celle-ci est faite de manière que les intervalles de temps émis par une station de base le soient en même temps que ceux de tout autre station de base. Les intervalles de temps de toutes les stations de base sont donc émis en même temps.

En effet, si tel n'était pas le cas, une station mobile émettant à forte puissance dans le canal montant pourrait rendre impossible la réception, par une autre station mobile proche de la première station mobile, des données du canal descendant.

Dans le mode de réalisation qui intéresse la présente invention, cette synchronisation entre stations de base est effectuée en réservant certains intervalles de temps à la transmission et à la réception d'une séquence de synchronisation Sync. La synchronisation d'une station de base est alors obtenue, d'une manière connue en soi, par la corrélation de la séquence reçue avec une séquence réplique de celle transmise. Ainsi, lorsqu'une station de base reçoit ce signal de synchronisation de l'une au moins des stations de base voisines, elle peut ajuster son séquencement à celui des autres stations de base.

La séquence de synchronisation généralement utilisée est longue (plusieurs milliers de chips) afin d'avoir un meilleur gain dans le traitement de corrélation.

Une période de garde Gs est prévue dans l'intervalle de temps affecté à la synchronisation pour que le processus de synchronisation ne soit pas perturbé par des dérives des horloges respectives des stations de base mais aussi des temps des trames, des intervalles de temps ou des chips.

La séquence de synchronisation Sync généralement utilisée est choisie pour avoir une bonne fonction d'auto-corrélation. Ainsi, généralement, elle présente une longueur $L$ qui est une puissance de $N^{ème}$ de 2, $N$ étant un nombre entier $N$, soit $L = 2^N$, ou encore une puissance $N^{ème}$ de 2 moins 1, soit $L = 2^N - 1$. Ce dernier cas est celui par exemple des séquences de Gold ou des séquences M généralement utilisées à des fins de synchronisation. Dans ce dernier cas, les longueurs $L$ peuvent être par exemple 15, 31, .., 1023, 2047, etc.

Or, la longueur maximale disponible pour une séquence de synchronisation correspond à celle d'un intervalle de temps diminuée de la durée de la période de garde de l'intervalle de temps affecté à cette séquence de synchronisation. On comprendra qu'il est toujours possible de choisir une séquence de synchronisation dont la longueur est inférieure à cette longueur disponible.

Par exemple, dans le cas du système W-CDMA TDD, la longueur disponible est de 2560 - 160 = 2400 chips. On pourra alors choisir comme longueur de séquences : $L = 2^{11}-1 = 2047$ chips, c'est-à-dire $N = 11$.

En général, l'intervalle de temps affecté à la synchronisation comprend une séquence de synchronisation Sync placée en début d'intervalle de temps suivie d'une période de temps sans émission elle-même suivie d'une période de garde Gs.

Or, il s'avère que cette configuration pose problème du fait des interférences qui sont engendrées avec les intervalles de temps précédents et suivants pendant le processus de corrélation mis en oeuvre à la réception de l'intervalle de temps de synchronisation.

Une demande de brevet internationale publiée sous le numéro WO 00/57581 présente un procédé de synchronisation mettant en oeuvre une séquence de synchronisation émise avec un retard par rapport au début d'un intervalle de synchronisation, ledit retard étant spécifique à la station de base émettrice.

Le but de la présente invention est de proposer un procédé d'émission d'un signal de synchronisation du type mentionné ci-dessus qui permette de supprimer ou pour le moins d'atténuer les interférences avec les intervalles de temps précédents et suivants engendrées pendant le processus de corrélation, tout en permettant d'émettre la séquence de synchronisation avec une puissance d'émission maximale.

A cet effet, un procédé d'émission conforme au paragraphe introductif consistant à émettre la séquence de synchronisation Sync avec un retard D par rapport au début dudit intervalle de temps de synchronisation est caractérisé selon la présente invention en ce que ledit retard D est supérieur au temps nécessaire à la puissance d'émission pour passer de la puissance minimale à la puissance maximale et est tel que ladite séquence de synchronisation se trouve centrée dans l'intervalle de temps compris entre la fin de l'émission des données de l'intervalle de temps précédent l'intervalle de temps de synchronisation et le début d'émission des données de l'intervalle de temps suivant ledit intervalle de temps de synchronisation.

Selon une autre caractéristique de l'invention, lorsque ledit procédé d'émission selon une des revendications précédentes est mis en oeuvre dans un système de transmission pour lequel chaque intervalle de temps a une durée $D_{it}$, pour lequel une période de garde de chaque intervalle de temps it a une durée $d$, la longueur de ladite séquence de synchronisation étant $L$, ledit retard D est donné par la relation suivante :

$$D = \frac{D_{it} - d - L}{2}$$

Plus précisément, lorsque ledit procédé est mis en oeuvre dans un système de transmission de type W-CDMA TDD pour lequel chaque intervalle de temps a une durée de 2560 chips, pour lequel une période de garde de chaque intervalle de temps a une durée de 96 chips, caractérisé en ce que la longueur de ladite séquence de synchronisation est de 2047 ou 2048 chips et en ce que ledit retard D est de 208 chips.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

La Fig. 1 est une vue d'une trame d'émission d'un système de transmission du type à W-CDMA TDD, et La Fig. 2 est une vue d'une partie d'une telle trame, incorporant un intervalle de temps de synchronisation.

A la Fig. 2, on voit trois intervalles de temps $it_{n-1}$, $it_n$ et $it_{n+1}$ dont celui du milieu $it_n$ est dédié à la synchronisation. Pour ce faire, il supporte une séquence de synchronisation Sync et comporte une période de garde. La longueur de la séquence de synchronisation $L$ est inférieure à la longueur $D_{it}$ d'un intervalle de temps diminué de la durée $d_s$ de la période de garde.

Si l'on se place, à titre d'exemple, dans le cas du système W-CDMA TDD, la longueur d'un intervalle de temps est généralement de 2560 chips. Comme cela a déjà été mentionné dans le préambule de la présente description, la longueur $L$ de la séquence de synchronisation est égale soit à la puissance $N^{ème}$ de 2 soit à la puissance $N^{ème}$ de 2 à laquelle on ôte 1.

Les périodes de garde G, $G_s$ de l'intervalle de temps $it_{n-1}$ et de l'intervalle de temps $it_n$ sont représentées. Dans le cas du système W-CDMA TDD, la période de garde G d'un intervalle de temps transportant des données est de 96 chips. La période de garde Gs est par contre un peu plus longue en ce qui concerne l'intervalle de temps alloué à la synchronisation. Elle est alors en effet de 160 chips.

Comme on peut le constater sur la Fig. 2, selon le procédé de la présente invention, la séquence de synchronisation Sync est émise avec un retard D par rapport au début de l'intervalle de temps de synchronisation $it_n$.

Ainsi, lorsqu'à la réception de ce signal de synchronisation, on opère à une corrélation glissante de ce signal avec une réplique locale de la séquence de synchronisation, le pic principal résultat de cette corrélation est cherché dans une zone encadrant la position espérée de ladite séquence de synchronisation Sync. Or, en retardant l'émission de la séquence de synchronisation par rapport au début de l'intervalle de temps de synchronisation, on limite le recouvrement de la partie objet du processus de corrélation en provenance de l'intervalle de temps précédent $it_{n-1}$.

Selon une autre caractéristique de la présente invention, le retard D est tel que la séquence de synchronisation Sync se trouve centrée dans la période de temps comprise entre la fin de l'émission des données de l'intervalle de temps $it_{n-1}$ (point A sur la Fig. 2) précédant l'intervalle de temps de synchronisation $it_n$ et le début d'émission des données de l'intervalle de temps $it_{n+1}$ (point B) suivant ledit intervalle de temps de synchronisation $it_n$. Ainsi, il est possible d'écrire :

$$D = \frac{D_{it} - d - L}{2}$$

Dans le cas d'un système de transmission de type W-CDMA TDD pour lequel chaque intervalle de temps a une durée de 2560 chips, pour lequel la période de garde G de chaque intervalle de temps a une durée de 96 chips et celle Gs de chaque intervalle de temps de synchronisation est de 196 chips, le retard D est alors de 208 chips pour une longueur de synchronisation $L$ de 2047 chips ou 2048 chips.

Généralement, notamment pour pouvoir être reçu par d'autres stations de base nécessairement extérieures à la cellule couverte par la station de base considérée, la séquence de synchronisation Sync est émise avec une puissance supérieure à celle des données destinées aux stations mobiles. Cette puissance d'émission de la séquence de synchronisation Sync est généralement la puissance maximale que peut offrir une station de base.

En effet, la puissance d'émission de la séquence de synchronisation par une station de base est nécessairement plus élevée que celle des données vers les mobiles puisqu'elle doit permettre d'atteindre d'autres stations de base extérieures à la cellule couverte par la station de base considérée. Par ailleurs, cette puissance d'émission est maximale dans la mesure où la séquence de synchronisation est seule émise à ce moment.

Or, la puissance d'émission d'une station de base (comme d'une station mobile) ne passe pas instantanément d'une valeur, qui peut être minimale, à une valeur qui est maximale et réciproquement. Par exemple, pour une station de base, la durée de la montée en puissance est d'environ 16 chips alors qu'elle est 76 chips pour la descente.

De ce fait, pour permettre à la séquence de synchronisation Sync d'être entièrement émise à la puissance maximale, selon une autre caractéristique de la présente invention, le retard D est au moins supérieur au temps nécessaire à la puissance d'émission pour passer de la puissance minimale à la puissance maximale.

On a représenté à la Fig. 2, au-dessus de l'intervalle de temps de synchronisation $it_n$, la puissance d'émission P de la station de base considérée et on peut constater que la séquence de synchronisation Sync est émise à puissance maximale.

## Revendications

1. Procédé d'émission d'un signal de synchronisation pendant un intervalle de temps de synchronisation d'un système de télécommunication par stations mobiles du type duplex à division de temps (TDD) où les données sont transmises dans des trames constituées d'intervalles de temps, ledit signal de synchronisation incluant une séquence de synchronisation, procédé consistant à émettre la séquence de synchronisation Sync avec un retard D par rapport au début dudit intervalle de temps de synchronisation, procédé **caractérisé en ce que** ledit retard D est supérieur au temps nécessaire à la puissance d'émission pour passer de la puissance minimale à la puissance maximale et est tel que ladite séquence de synchronisation se trouve centrée dans l'intervalle de temps compris entre la fin de l'émission des données de l'intervalle de temps précédent l'intervalle de temps de synchronisation et le début d'émission des données de l'intervalle de temps suivant ledit intervalle de temps de synchronisation.

2. Procédé d'émission selon la revendication précédente, mis en oeuvre dans un système de transmission pour lequel chaque intervalle de temps a une durée $D_{it}$, pour lequel une période de garde de chaque intervalle de temps it a une durée $d$, la longueur de ladite séquence de synchronisation étant $L$, **caractérisé en ce que** ledit retard D est donné par la relation suivante :

$$D = \frac{D_{it} - d - L}{2}$$

3. Procédé d'émission selon l'une des revendications précédentes, mis en oeuvre dans un système de transmission de type W-CDMA TDD pour lequel chaque intervalle de temps a une durée de 2560 chips, pour lequel une période de garde de chaque intervalle de temps a une durée de 96 chips, **caractérisé en ce que** la longueur de ladite séquence de synchronisation est de 2047 ou 2048 chips et **en ce que** ledit retard D est de 208 chips.

## Claims

1. Method of transmitting a synchronisation signal during a synchronisation time period of a telecommunication system by mobile stations of the time division duplex (TDD) type, where the data are transmitted in frames made up of time periods, said synchronisation signal including a synchronisation sequence, a method consisting of transmitting the synchronisation sequence Sync with a delay D relative to the start of said synchronisation time period, a method **characterised in that** said delay D is greater than the time necessary for the transmission power to pass from the minimum power to the maximum power and is such that said synchronisation sequence is centred in the time period between the end of the transmission of the data of the time period preceding the synchronisation time period and the start of transmission of the data of the time period following said synchronisation time period.

2. Method of transmission according to the preceding claim, carried out in a transmission system for which each time period has a duration $D_{it}$, for which a guard period of each time period it has a duration d, the length of said synchronisation sequence being $L$, **characterised in that** said delay D is given by the following equation:

$$D = \frac{D_{it} - d - L}{2}$$

3. Method of transmission according to one of the preceding claims, carried out in a transmission system of the W-CDMA TDD type, for which each time period has a duration of 2560 chips, for which a guard period of each time period has a duration of 96 chips, **characterised in that** the length of said synchronisation sequence is 2047 or 2048 chips, and **in that** said delay D is 208 chips.

**Patentansprüche**

1. Verfahren zur Übertragung bzw. zum Senden eines Synchronisierungssignals während eines Zeitintervalls der Synchronisierung eines Telekommunikationssystems über mobile Stationen vom Zeitduplextyp (TDD), in dem die Daten in Rastern übertragen werden, die sich aus Zeitintervallen zusammensetzen, wobei das Synchronisierungssignal eine Synchronisierungssequenz enthält, wobei das Verfahren darin besteht, die Synchronisierungssequenz Sync mit einer Verzögerung D in Bezug auf den Anfang des Zeitintervalls der Synchronisierung zu übertragen bzw. zu senden, wobei das Verfahren **dadurch gekennzeichnet ist, dass** die Verzögerung D länger als die Zeit ist, die dafür nötig ist, dass die Übertragungs- bzw. Sendeleistung von der Mindestleistung zur maximalen Leistung übergeht, und derart ist, dass die Synchronisierungssequenz im Zeitintervall zwischen dem Ende der Übertragung bzw. des Sendens der Daten des Zeitintervalls vor dem Zeitintervall der Synchronisierung und dem Anfang zur Übertragung bzw. des Sendens der Daten'des Zeitintervalls nach dem Zeitintervall der Synchronisierung zentriert ist.

2. Verfahren zur Übertragung nach dem vorhergehenden Anspruch, das in einem Übertragungssystem eingesetzt wird, für das jedes Zeitintervall eine Dauer $D_{it}$ aufweist, für das eine Schutzperiode jedes Zeitintervalls it eine Dauer d aufweist, wobei die Länge der Synchronisierungssequenz L ist, **dadurch gekennzeichnet, dass** die Verzögerung D durch die folgende Beziehung gegeben ist:

$$D = \frac{D_{it} - d - L}{2}$$

3. Verfahren zur Übertragung nach einem der vorhergehenden Ansprüche, das in einem Übertragungssystem vom Typ W-CDMA TDD eingesetzt wird, für das jedes Zeitintervall eine Dauer von 2560 Chips aufweist, für das eine Schutzperiode jedes Zeitintervalls eine Dauer von 96 Chips aufweist, **dadurch gekennzeichnet, dass** die Länge der Synchronisierungssequenz 2047 oder 2048 Chips entspricht und dass die Verzögerung D 208 Chips entspricht.

Fig. 1

Fig. 2